# EUROPÄISCHE PATENTSCHRIFT

(11) **EP 0 780 568 B1**
(45) Veröffentlichungstag und Bekanntmachung des Hinweises auf die Patenterteilung: **25.11.1998**
(21) Anmeldenummer: 96113030.9
(22) Anmeldetag: 13.08.1996
(51) Int. Cl.: F02M 37/02

(54) **Kraftstoff-Fördersystem**
Fuel feed system
Système d'alimentation en carburant

(30) Priorität: 18.12.1995 DE 19547244
(43) Veröffentlichungstag der Anmeldung: 25.06.1997
(73) Patentinhaber: Bayerische Motoren Werke Aktiengesellschaft, 80788 München (DE)
(72) Erfinder: Treml, Christian, 81475 München (DE); Kroiss, Hugo, 82194 Gröbenzell (DE)

(56) Entgegenhaltungen:
- WO-A-96/05423
- DE-A- 4 128 279
- DE-U- 9 104 511

## Beschreibung

Die Erfindung betrifft ein Kraftstoff-Fördersystem für Kraftfahrzeuge gemäß dem Oberbegriff des Anspruchs 1. Insbesondere betrifft die Erfindung ein Kraftstoff-Fördersystem für Diesel-Motoren.

Aus der älteren, nachveröffentlichten WO-A-96/05423 (dieses Dokument fällt unter Art. 54(3) EPÜ) ist ein Kraftstoff-Fördersystem für einen Verbrennungsmotor bekannt. Durch eine Förderpumpe wird eine Kraftstoff-Fördermenge aus einem Kraftstoffbehälter angesaugt und in eine Förderleitung gepumpt. Ein Teil der Fördermenge wird als Treibmenge für eine Saugstrahlpumpe benötigt, die Kraftstoff aus dem Kraftstoffbehälter in einen Schwalltopf befördert, in dem die Förderpumpe angeordnet ist. Zu der durch die Treibmenge für die Saugstrahlpumpe verminderten Fördermenge wird eine vom Motor kommende Rücklaufmenge über eine Rücklaufleitung zugeführt. Die Rücklaufleitung ist mit der Förderleitung so verbunden ist, daß sich die Treibmenge der Saugstrahlpumpe aus der Differenz der Fördermenge und eines Verbrauchs des Motors ergibt. Die Verbindung der Rücklaufleitung erfolgt ferner so, daß die Rücklaufmenge wieder dem Verbrennungsmotor und nicht dem Kraftstoffbehälter zugeführt wird. An die Förderleitung ist eine Vorlaufleitung angeschlossen, durch die eine Vorlaufmenge zum Motor strömt. Die Vorlaufmenge ergibt sich aus der um die Treibmenge verminderten Fördermenge zuzüglich der Rücklaufmenge.

Ferner ist aus der DE-OS 41 28 279 eine Kraftstoff-Fördereinrichtung für einen Satteltank bekannt, bei der in der einen Kammer eine Kraftstoffpumpe und in der anderen Kammer eine Saugstrahlpumpe angeordnet ist. Die Saugstrahlpumpe wird von der Kraftstoffpumpe über eine Treibstrahlleitung beaufschlagt und fördert Kraftstoff über eine Förderleitung in einen Schwalltopf, in dem sich auch die Kraftstoffpumpe befindet. Nachteilig bei dieser Fördereinrichtung ist, daß die umgewälzten Kraftstoffmengen abhängig von der Motordrehzahl sind. Die Umwälzmenge schwankt daher in einem großen Bereich, wobei die Umwälzmenge maximal das Doppelte bis Dreifache der Umwälzmenge im Leerlauf beträgt. Entsprechend unterschiedlich ist auch die Förderleistung der Saugstrahlpumpe.

Aufgabe der Erfindung ist es, ein Kraftstoff-Fördersystem zu schaffen, bei dem die Schwankungen der Treibmengen für die Saugstrahlpumpe geringer sind.

Diese Aufgabe wird durch die Merkmale des Anspruchs 1 gelöst.

Erreicht wird dies dadurch, daß sich die Treibmenge der Saugstrahlpumpe aus der gesamten Rücklaufmenge und einer vom Vorlauf abgezweigten Menge zusammensetzt. Durch die Addition der zur Saugstrahlpumpe abgezweigten Kraftstoffmenge und der vom Motor zurückströmenden Rücklaufmenge schwankt die Treibmenge für die Saugstrahlpumpe in dem Bereich zwischen der Förderleistung der Kraftstoffpumpe und der Differenz der Förderleistung der Kraftstoffpumpe und dem Motorverbrauch. Während bei bekannten Fördersystemen das Verhältnis zwischen maximaler und minimaler Treibmenge der Saugstrahlpumpe bei einem Faktor fv̇ = ca. 4 lag, beträgt bei der erfindungsgemäßen Anordnung der Faktor fv̇ = ca. 1,25. Von Vorteil ist femer, daß die Schwankungen des Vorlaufdruckes geringer sind.

Vorteilhaft ist auch, daß das gleiche Tanksystem für Einspritzpumpen mit unterschiedlichen Umwälzmengen anwendbar ist. Dadurch ergibt sich eine Variantenreduzierung.

Von Vorteil ist auch, daß die Verbindung der Vorlaufleitung mit der Rücklaufleitung über ein "N"- oder "H"-förmiges, integriertes Bauteil erfolgen kann.

Ausführungsformen der Erfindung werden nachstehend anhand der Zeichnungen beispielshalber beschrieben. Dabei zeigen:
- Figur 1: eine Prinzipdarstellung eines zum Stand der Technik gehörenden Kraftstoff-Fördersystems,
- Figur 2: eine Prinzipdarstellung einer ersten Ausführungsform eines Kraftstoff-Fördersystems und
- Figur 3: eine Prinzipdarstellung einer zweiten Ausführungsform eines Kraftstoff-Fördersystems.

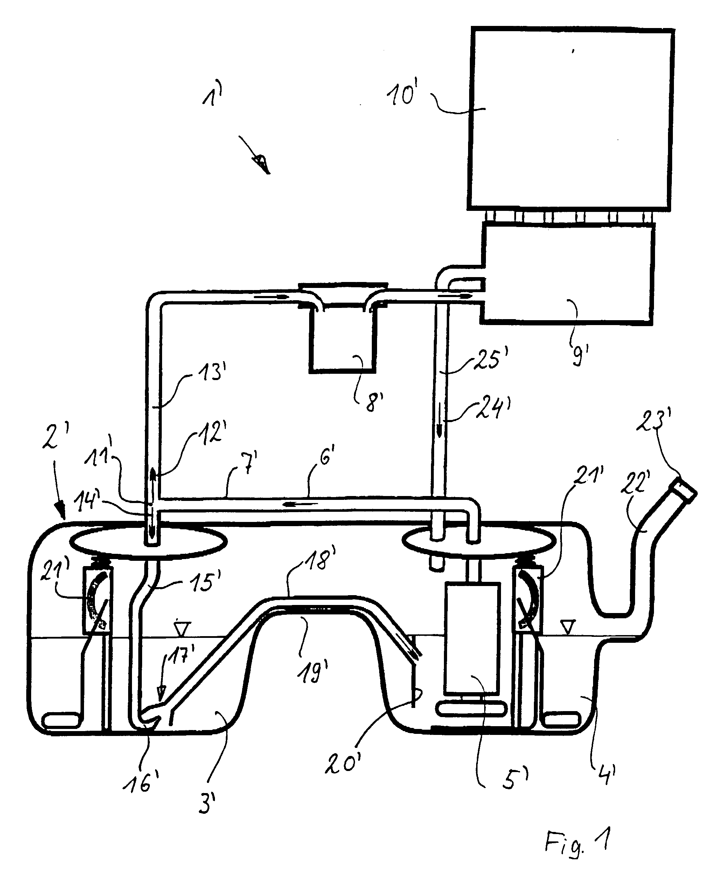

Die Figur 1 zeigt ein zum Stand der Technik gehörendes Kraftstoff-Fördersystem 1' für ein Kraftfahrzeug. Das Kraftstoff-Fördersystem 1' besteht aus einem Kraftstoffbehälter 2', der zwei Kammem 3' und 4' aufweist. In der einen Kammer 4' ist eine Förderpumpe 5' angeordnet, die eine mit einem Pfeil 6' gekennzeichneten Kraftstoff-Fördermenge über eine Förderleitung 7' zu einem Filter 8' und von da zu einer Einspritzpumpe 9' eines Motors 10' fördert.

Die Förderleitung 7' weist eine Verzweigungsstelle 11' auf, an der die Kraftstoff-Fördermenge 6' aufgeteilt wird in eine mit einem Pfeil 12' gekennzeichnete Vorlaufmenge, die in eine Vorlaufleitung 13' strömt und in eine mit einem Pfeil 14' gekennzeichnete Abzweig- oder Treibmenge, die in eine Treibleitung 15' fließt. Über die Kraftstoff-Treibmenge 14' wird eine am Ende 16' der Treibleitung 15' ausgebildete Saugstrahlpumpe 17' angetrieben. Über eine Förderleitung 18' wird der in der Kammer 3' befindliche Kraftstoff in die über einen Sattel 19' abgetrennte Kammer 4' gefördert, der beispielsweise direkt in einen Schwalltopf 20' fließt. Im Schwalltopf 20' ist die Förderpumpe 5' sowie eine Kraftstoff-Anzeigevorrichtung 21' angeordnet. An der Kammer 4' ist ferner ein Einfüllrohr 22' ausgebildet, das mit einem Deckel 23' verschließbar ist. Vom Motor 10' fließt die überschüssige, mit einem Pfeil 24' gekennzeichnete Rücklaufmenge in einer Rücklaufleitung 25' in den Schwalltopf 20' zurück.

Bei dem vorbekannten Kraftstoff-Fördersystem 1' stimmt die Abzweigmenge mit der Treibmenge 14' der Saugstrahlpumpe 17' überein. Anhand der nachfolgenden Tabelle A werden die unterschiedlichen Kraftstoffmengen in Abhängigkeit vom Motorverbrauch und von der Motordrehzahl angegeben. Die in der Tabelle A aufgelisteten Zahlenwerte sind dabei nur beispielhaft angegeben.

**Tabelle A**

| Bezugszeichen | 10' | 10' | 6' | 12' | 24' | 14' |
|---|---|---|---|---|---|---|
| | **Motor- Drehzahl** (U/min) | **Motor- Verbrauch** (l/h) | **Pumpen- Förder- Leistung** (l/h) | **Vorlaufmenge** (l/h) | **Rücklaufmenge** (l/h) | **Treib- Menge** (l/h) |
| Betriebszustand | | | | | | |
| ① | min | ca. 0/min | 200 | 25 | 25 | 175 |
| ② | max | ca. 0/min | 200 | 160 | 160 | 40 |
| ③ | max | 40/max | 200 | 160 | 120 | 40 |

Im ersten Betriebszustand ① wird im Leerlauf, d. h. bei einer minimalen Drehzahl und einem minimalen Kraftstoffverbrauch die von der Förderpumpe 5' geförderte Kraftstoff-Fördermenge oder Förderleistung 6' in die Vorlaufmenge 12', die Rücklaufmenge 24' und die Treibmenge 14' aufgeteilt. Im vorliegenden Beispiel wird die Förderleistung als annähernd konstant V̇ = 200 l/h angenommen. Da der Motor im ersten Betriebszustand ① im Leerlauf nahezu keinen Kraftstoff verbraucht, wird aufgrund der niedrigen Drehzahl nur eine geringe Vorlaufmenge 12' V̇ = 25 l/h zum Motor 10' gefördert. Die gleiche Menge strömt als Rücklaufmenge 24' V̇ = 25 l/h zurück. Die Treibmenge 14' ergibt sich aus der Differenz der Förderleistung 7' abzüglich der Vorlaufmenge V̇ = 200 - 25 = 175 l/h.

Beim zweiten Betriebszustand ② ist die Schubabschaltung bei maximaler Drehzahl angegeben, bei dem der Kraftstoffverbrauch des Motors 10' ebenfalls minimal ist. Aufgrund der hohen Drehzahl ist die Vorlaufmenge 12' relativ hoch und beträgt im vorliegenden Beispiel V̇ = 160 l/h. Die Treibmenge 14' ergibt sich dann als Differenz zwischen der Förderleistung 6' und der Vorlaufmenge 12 V̇ = 200 - 160 = 40 l/h.

Im dritten Belastungsfall ③ bringt der Motor 10' seine maximale Leistung bei einem maximalen Kraftstoffverbrauch, der im vorliegenden Bereich V̇ = 40 l/h betragen soll. Aufgrund der hohen Drehzahl beträgt die Vorlaufmenge 12' V̇ = 160 l/h. Die Treibmenge 14' ergibt sich zu V̇ = 40 l/h.

Aus der oben dargestellten Tabelle geht hervor, daß die Treibmenge der Saugstrahlpumpe 17' zwischen 40 und 175 l/h schwankt.

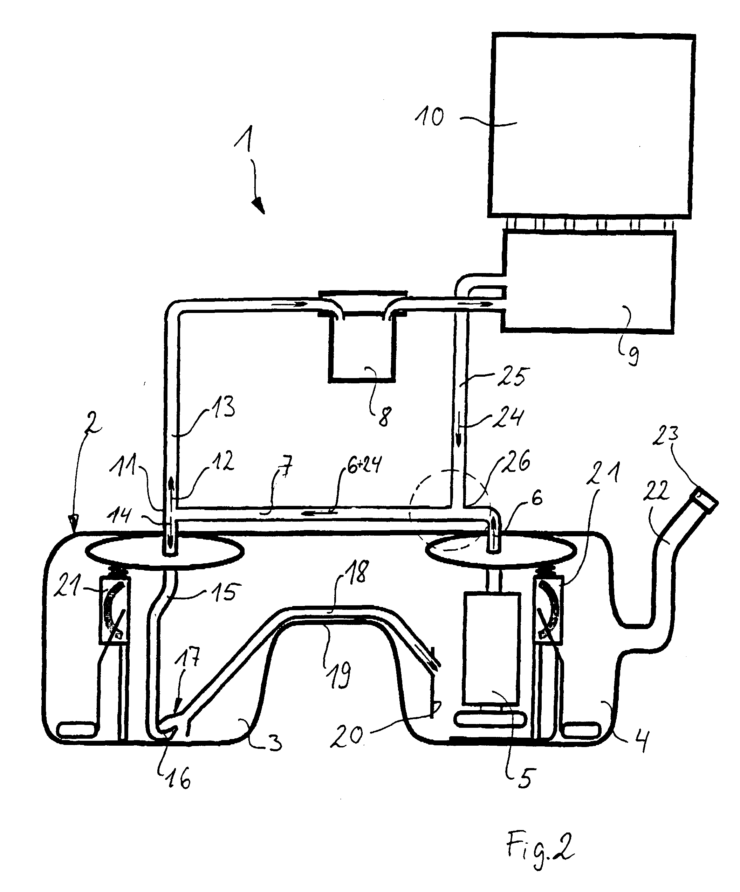

Das in der Figur 2 gezeigte Kraftstoff-Fördersystem 1 unterscheidet sich von dem in der Figur 1 gezeigten Kraftstoff-Fördersystem 1' lediglich dadurch, daß die Rücklaufleitung 25 an einer neuen Verzweigungsstelle 26 mit der Förderleitung 7 verbunden ist. Im übrigen stimmen die Bezugszeichen der Figur 2 mit den Bezugszeichen der Figur 1 überein, wobei bei den Bezugszeichen der Figur 2 das Apostroph weggelassen ist.

Aufgrund der neuen Verzweigungsstelle 26 wird die Rücklaufmenge 24 zusätzlich zum Antrieb der Saugstrahlpumpe 17 genutzt. Aus der nachfolgenden Tabelle B ergeben sich die einzelnen umlaufenden Kraftstoffmengen bei den drei verschiedenen Betriebszuständen des Motors entsprechend der Tabelle A.

**Tabelle B**

| Bezugszeichen | 10 | 10 | 6 | 12 | 24 | 14 |
|---|---|---|---|---|---|---|
| | **Motor- Drehzahl** (U/min) | **Motor- Verbrauch** (l/h) | **Pumpen- Förder- Leistung** (l/h) | **Vorlaufmenge** (l/h) | **Rücklaufmenge** (l/h) | **Treib- Menge** (l/h) |
| Betriebszustand | | | | | | |
| ① | min | ca. 0/min | 200 | 25 | 25 | 200 |
| ② | max | ca. 0/min | 200 | 160 | 160 | 200 |
| ③ | max | 40/max | 200 | 160 | 120 | 160 |

Die zur Saugstrahlpumpe 17 geförderte Treibmenge 14 setzt sich bei dem Kraftstoff-Fördersystem 1 der Figur 2 aus der Summe der Förderleistung 6 mit der Rücklaufmenge 24 abzüglich der Vorlaufmenge 12 zusammen. Die Treibmenge 14 schwankt in einem Bereich V̇ = 160 - 200 (l/h). Die Differenzmenge beträgt somit ΔV̇ = 40 (I/h). Demgegenüber beträgt die Volumenstromdifferenz bei dem vorbekannten Kraftstoff-Fördersystem 1' V̇ = 175 - 40 = 135 (l/h). Somit sind die Kraftstoffmengen-Schwankungen bei dem Kraftstoff-Fördersystem 1 der Figur 2 ungefähr um den Faktor 3 geringer als bei dem Kraftstoff-Fördersystem 1' der Figur 1.

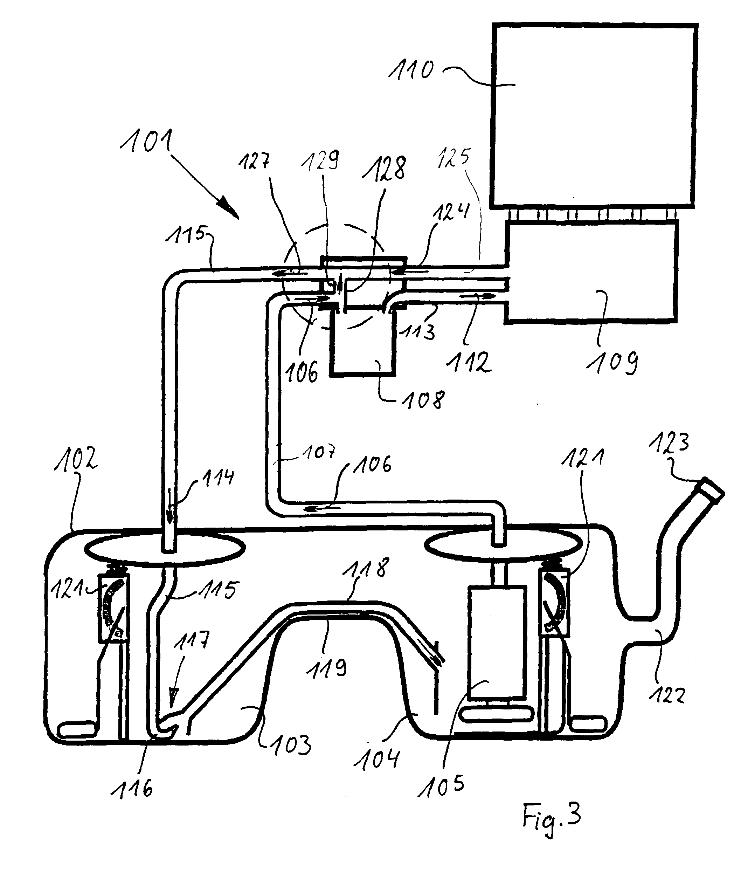

Die Figur 3 zeigt eine zweite Ausführungsform eines Kraftstoff-Fördersystems 101, bei dem die Förderleitung 107 mit der Rücklaufleitung 125 über eine Leitung 129 innerhalb des Filters 108 an einer Verzweigungsstelle 128 verbunden ist. Diese Stelle ist mit einem strichlierten Kreis gekennzeichnet. Im übrigen stimmen die Bauteile mit den Bauteilen der Figur 2 überein, wobei zu den Bezugszeichen der Figur 2 die Zahl 100 addiert wurde. Bei dieser Ausführungsform des Kraftstoff-Fördersystem 101 ergeben sich die gleichen Vorteile wie bei dem Kraftstoff-Fördersystem 1 der Figur 2 hinsichtlich der geringeren Schwankungen der Volumenströme und Drücke. Als weiterer Vorteil kommt bei dem Kraftstoff-Fördersystem 101 der Figur 3 hinzu, daß die aufgeheizte Kraftstoff-Rücklaufmenge 124 die eventuell noch kalte Fördermenge 106 erwärmt. Besonders bei einem bei kalten Temperaturen ausflockenden Kraftstoff kann es aufgrund der geringen Querschnitte im Filter 108 zu Verstopfungen kommen. Durch die Aufwärmung des Kraftstoffes wird dieses Problem in einfacher Weise gelöst.

## Patentansprüche

1. Kraftstoff-Fördersystem für Kraftfahrzeuge, mit mindestens einem Motor (10,110), bestehend aus einem Kraftstoffbehälter (2;102), mindestens einer Saugstrahlpumpe (17, 117), einer Förderpumpe (5;105), einer Förderleitung (7;107) und einer mit der Förderleitung (7;107) in Verbindung stehenden Vorlaufleitung (13, 113), die geeignet sind um zwischen der Förderpumpe (5;105) und dem Motor (10;110) angeordnet zu werden, einer Treibleitung (15,115) für die Saugstrahlpumpe (17, 117), wobei die Treibleitung (15, 115) mit der Förderleitung (7;107) verbunden ist, und einer Rücklaufleitung (25;125), die dazu geeignet ist die vom Motor (10; 110) kommende Rücklaufmenge (24;124), aufzunehmen wobei die Rücklaufleitung (25, 125) mit der Förderleitung (7, 107) so verbunden ist, daß sich eine Treibmenge (14, 114) für die Saugstrahlpumpe (17, 117), aus der Differenz der Fördermenge (6, 106) und eines Verbrauchs des Motors (10,110) ergibt, wobei der Kraftstoffbehälter (2;102) mindestens zwei Kammern (3,4;103,104) aufweist, wobei die Förderpumpe (5,105) in einer der Kammern (3,4;103,104) und je eine Saugstrahlpumpe (17;117) in den übrigen Kammern (3,4;103,104) angeordnet ist, und wobei die Verbindung der Förderleitung (7; 107) mit der Vorlaufleitung (13, 113) und der Rücklaufleitung (25, 125) so erfolgt, daß ein Teil der vom Motor (10,110) kommenden Rücklaufmenge (24;124) als Treibmenge (14;114) der jeweiligen Saugstrahlpumpe (17;117) in den Kraftstoffbehälter (2,102) zurückfließt.

2. Kraftstoff-Fördersystem nach Anspruch 1, dadurch gekennzeichnet, daß eine Verzweigungsstelle (128), an der die Förderleitung (107) über eine Leitung (129) mit der Rücklaufleitung (125) verbunden ist, in einem Filter (108) ausgebildet ist.

3. Kraftstoff-Fördersystem nach den Ansprüchen 1 oder 2, dadurch gekennzeichnet, daß die Verzweigungsstellen (11, 26, 128) der Förderleitung (7, 107) mit der Rücklaufleitung (25, 125) und der Förderleitung (7, 107) mit der Vorlaufleitung (13, 113) und der Treibleitung (15, 115) jeweils in einem einzigen N- oder H-förmigen Bauteil integriert sind.

## Claims

1. A fuel delivery system for motor vehicles, with at least one motor (10;110), comprising a fuel container (2; 102), at least one induction flow pump (17;117), a supply pump (5; 105), a delivery pipe (7; 107) and a supply pipe (13; 113) in connection to the delivery pipe (7; 107), which is suited for being arranged between the supply pump (5; 105) and the motor (10; 110), a drive pipe (15; 115) for the induction flow pump (17; 117), whereby the drive pipe (15; 115) is connected to the delivery pipe (7; 107), and a return pipe (25; 125) which is suited to accept the return flow quantity (24; 124) coming from the motor (10; 110), whereby the return flow pipe (25; 125) is connected to the delivery pipe (7; 107) in such a way that a drive quantity (14; 114) results for the induction flow pump (17; 117) from the difference of the delivery (6; 106) and a consumption of the motor (10; 110), whereby the fuel container (2; 102) has at least two chambers (3, 4; 103,104), whereby the delivery pump (5; 105) is arranged in one of the chambers (3, 4; 103,104) and an induction flow pump (17; 117) in each of the other chambers (3, 4; 103, 104) and whereby the connection of the delivery pipe (7; 107) with the supply pipe (13; 113) and the return flow pipe (25; 125) is effected in such a way that a part of the return flow quantity (24; 124) coming from the motor (10; 110) flows back as drive quantity (14; 114) for the respective induction flow pump (17; 117) in the fuel container (2; 102).

2. A fuel delivery system according to Claim 1, characterised in that a branching position (128) onto which the delivery pipe (107) is connected via a pipe (129) with the return flow pipe (125) in a filter (108).

3. A fuel delivery system according to Claim 1 or Claim 2, characterised in that the branching position (11, 26,128) of the delivery pipe (7, 107) is integrated with the return flow pipe (25, 125) and the delivery pipe (7, 107) with the supply pipe (13, 113) and the drive pipe (5, 105) in a single N- or H-shaped component.

## Revendications

1. Système d'alimentation en carburant pour un véhicule automobile avec un moteur (10, 110), comprenant, un réservoir de carburant (2, 102), au moins une pompe à jet aspirante (17, 117), une pompe d'alimentation (5, 105), une conduite d'alimentation (7, 107) et une conduite d'aller (13, 113) communiquant avec la conduite d'alimentation (7, 107) et qui sont prévues entre la pompe d'alimentation (5, 105) et le moteur (10, 110), une conduite d'entraînement (15, 115) pour la pompe à jet (17, 117), la conduite d'entraînement (15, 115) étant reliée à la conduite d'alimentation (7, 107) ainsi qu'une conduite de retour (25, 125) qui convient pour recueillir le débit de retour (24, 124) venant du moteur (10, 110), la conduite de retour (25, 125) étant reliée à la conduite d'alimentation (7, 107) pour arriver à un débit d'entraînement (14, 114) pour la pompe à jet (17, 117) résultant de la différence du débit d'alimentation (6, 106) et de la consommation du moteur (10, 110) ; le réservoir à carburant (2, 102) ayant au moins deux chambres (3, 4 ; 103, 104), la pompe d'alimentation (5, 105) étant placée dans l'une des chambres (3, 4 ; 103, 104) et chaque fois une pompe à jet aspirante (17, 117) dans l'autre chambre (3, 4 ; 103, 104) et la liaison de la conduite d'alimentation (7, 107) avec la conduite d'aller (13, 113) et la conduite de retour (25, 125) se faisant pour qu'une partie du débit de retour (24, 124) provenant du moteur (10, 110) revienne comme débit d'entraînement (14, 114) pour la pompe à jet aspirante (17, 117) respective, en revenant dans le réservoir à carburant (2, 102).

2. Système d'alimentation en carburant selon la revendication 1,
caractérisé par
un point de dérivation (128) auquel est reliée la conduite d'alimentation (107) par une conduite (129) avec la conduite de retour (125) dans un filtre (108).

3. Système d'alimentation en carburant selon les revendications 1 ou 2,
caractérisé en ce que
les points de dérivation (11, 26, 128) de la conduite d'alimentation (7, 107) sont intégrés à la conduite de retour (25, 125) et la conduite d'alimentation (7, 107) est intégrée à la conduite d'alimentation (13, 113) et à la conduite d'entraînement (15, 115) chaque fois sous la forme d'une pièce unique en N ou H.
